# EUROPEAN PATENT SPECIFICATION

(11) **EP 2 670 193 B1**
(45) Date of publication and mention of the grant of the patent: **19.08.2020**
(21) Application number: 11857347.6
(22) Date of filing: 29.12.2011
(51) Int. Cl.: H04W 28/16, H04W 36/08, H04W 84/04, H04L 5/00

(54) **RESOURCE PROCESSING METHOD AND DEVICE BASED ON RELAY NODE SWITCHING**
RESSOURCENVERARBEITUNGSVERFAHREN UND VORRICHTUNG AUF BASIS VON RELAISKNOTENSCHALTUNG
PROCÉDÉ ET DISPOSITIF DE TRAITEMENT DE RESSOURES BASÉS SUR LA COMMUTATION DE NOEUDS DE RELAIS

(30) Priority: 26.01.2011 CN 201110028323
(43) Date of publication of application: 04.12.2013
(73) Proprietor: Datang Mobile Communications Equipment Co., Ltd., Beijing 100083 (CN)
(72) Inventor: YANG, Yi, Haidian District Beijing 100083 (CN); ZHAO, Yali, Haidian District Beijing 100083 (CN); LI, Guoqing, Haidian District Beijing 100083 (CN)
(74) Representative: Dennemeyer & Associates S.A.
(86) International application number: PCT/CN2011/084931
(87) International publication number: WO 2012/100626

(56) References cited:
- WO-A1-2011/000192
- WO-A2-2010/101442
- CN-A- 101 867 406
- CN-A- 102 088 740
- ERICSSON ET AL: "Details of MBSFN configuration aspects for Un", 3GPP DRAFT; R2-103874_DETAILS_MBSFN_CONFIG_ASPECTS_FOR _UN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628 - 20100702, 22 June 2010 (2010-06-22), XP050605235, [retrieved on 2010-06-22]
- ALCATEL-LUCENT: "[70b#15]-LTE: Who determines RN Type/subframe partitioning and how is this communicated", 3GPP DRAFT; R2-104541, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Madrid, Spain; 20100823, 24 August 2010 (2010-08-24), XP050452055, [retrieved on 2010-08-24]
- 'RN actions on detecting Radio Link Failure of Un' 3GPP TSG-RAN WG2 #69BIS R2-102232, [Online] 16 April 2010, XP050605073 Retrieved from the Internet: <URL:http://www.3gpp.org/ftp/tsg_ran/WG2_RL 2/TSGR2_69bis/Docs/R2-102232.zip> [retrieved on 2012-03-10]
- 'Issues on Un and Uu link configuration during RN start up' 3GPP TSG-RAN WG2 #68BIS R2-100256, [Online] 22 January 2010, XP050420992 Retrieved from the Internet: <URL:http://www.3gpp.org/ftp/tsg_ran/WG2_RL 2/TSGR2_68bis/Docs/R2-100256.zip> [retrieved on 2012-03-10]
- 'Issue on MBSFN subframe reconfiguration' 3GPP TSG-RAN WG2 #69BIS R2-102255, [Online] 16 April 2010, XP050422616 Retrieved from the Internet: <URL:http://www.3gpp.org/ftp/tsg_ran/WG2_RL 2/TSGR2_69bis/Docs/R2-102255.zip> [retrieved on 2012-03-10]

## Description

This application requires the priority to Chinese patent application, which should be submitted to the Chinese Patent Office on January 26, 2011, the application No. 201110028323.8, as "Resource Processing Method and Device Based on Relay Node Switching".

### Field

The present disclosure relates to communication field, in particular to resource processing method and device based on relay node switching.

### Background

In mobile communication system in future, such as B 3G (Beyond Third Generation) or LTE-A (Long Term Evolution-Advanced), higher peak data rate and cell throughput capacity will be provided, and greater bandwidth will be required at mean time. At present, an undistributed bandwidth less than 2 GHz is rare and part of or all bandwidths required in B3G/LTE-A system can only be found on higher frequency range (such as above 3 GHz). The higher the frequency range is, the faster radio wave propagation and attenuation will be, the shorter the transmission distance will be and the more eNB will be required under the same coverage to continuous coverage. eNB requires high cost, so it will increase the deployment cost. To reduce the deployment cost and solve the coverage, RN (Relay Node) can be introduced to the system.

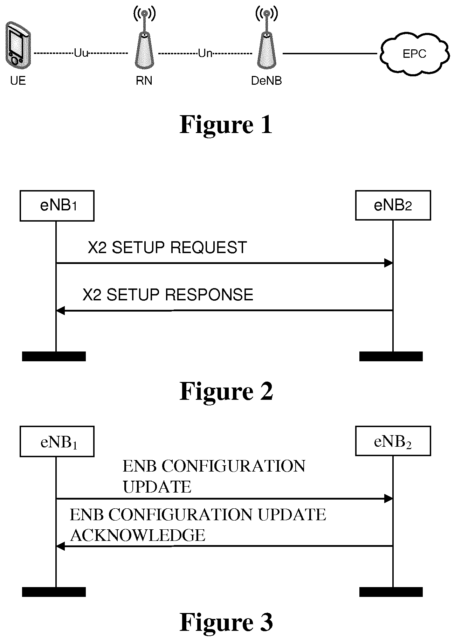

Fig. 1 shows the network structure of a LTE-A system introduced with the RN. The RN is connected to a core network through a donor cell under a DeNB (Donor Evolved Node B), a direct wired interface is not provided between the RN and the core network; each RN can control a or a plurality of cell (s). Interface between a UE and the RN is Uu, and that between the RN and the DeNB is Un.

A backhaul link refers to the link connected between a network and a core network. Un interface is a part of the backhaul link, which is a wireless backhaul link. When a Uu interface of a RN shares the same frequency range with the Un interface, to avoid interference, a DeNB shall negotiate with the RN which sub-frames are selected to receive and send data. For example, if the DeNB sends a downlink data to the RN on some sub-frames, the RN cannot send the downlink data to a UE under those sub-frames, otherwise, the same frequency interference will be aroused in the RN. If it is necessary to divide sub-frame between the DeNB and the RN, the DeNB completes sub-frame configuration and sends the backhaul sub-frame configuration information distributed to the RN through a RRC (Radio Resource Control).

In the prior art, the RN will select appropriate cell to connect according to frequency of the Uu interface and donor cell when selecting the donor cell. If the RN moves and further causes switch, the donor cell connected of the RN changes, and frequency used by a target cell may be different from the frequency of the original donor cell, so working state of the RN may change.

The inventor finds that at least the following problems exist:
In the prior art, how does the backhaul sub-frame information is configured when the RN changes the donor cell is not described.

ERICSSON ET AL, "Details of MBSFN configuration aspects for Un", 3GPP DRAFT;R2-103874 DETAILS MBSFN CONFIG ASPECTS FOR UN, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX ; FRANCE, (20100622), vol. RAN WG2, no. Stockholm, Sweden; 20100628-20100702 relates to performing configuration/activation and reconfiguration of the Un interface.

### Summary

Aspects of the invention are defined in the appended claims. The examples of the disclosure provide a resource processing method and device based on relay node switching to configure backhaul sub-frame information during RN switching.

To realize the purpose abovementioned, the examples of the disclosure
provide a resource processing method based on relay node switching, which comprises:
The RN determines, according to a preset policy, whether the destination evolved Node B device DeNB is required to divide resources for the RN and informs the DeNB of the determination result.

The examples of the disclosure provide a resource processing method based on relay node switching, which comprises:
When receiving the message that the DeNB is required to divide resources for the RN, the DeNB distributes the backhaul sub-frame information for the RN and sends the distributed backhaul sub-frame information to the RN.

The examples of the disclosure provide a RN, which comprises:
A judgment module, is used to determine whether the DeNB is required to divide resources for the RN according to the preset policy;
A sending module, is used to inform the DeNB the determination result.

The examples of the disclosure provide an eNB device, which comprises: A receiving module, is used to receive the message from the RN that the DeNB is required to divide resources for the RN;
A distribution module, is used to distribute the backhaul sub-frame information for the RN;
A sending module, is used to send the distributed backhaul sub-frame information to the RN.

Compared with the prior art, the present disclosure at least has the following advantages:
Sub-frame configuration of the backhaul link can be performed in the switching process, configuration of the carrier aggregation cell is coordinated, influence on operation of the RN is reduced, service continuity of a user is ensured maximally, and the number of discarded packets is reduced, thereby providing good network experiences for the user.

### Brief Description of the Drawings

Fig. 1 is a network structural diagram of LTE-A system after introducing RN in the prior art;
Fig. 2 is a diagram of establishment process of X2 interface in the prior art;
Fig. 3 is a diagram of configuration and update process of eNB in the prior art;
Fig. 4 is a diagram of X2 switching process in the prior art;
Fig. 5 is a flow diagram of a resource processing method based on relay node switching provided in example I;
Fig. 6 is a flow diagram of a resource processing method based on relay node switching provided in example II;
Fig. 7 is a flow diagram of a resource processing method based on relay node switching provided in example III;
Fig. 8 is a structural diagram of a relay node provided in example IV;
Fig. 9 is a structural diagram of an eNB device provided in example V;

### Detailed Description

In the following parts, detailed descriptions of the specific implementation mode of the present disclosure are made combined with drawings and examples.

As shown in Fig. 2 diagram of establishment process of X2 interface, X2 establishment process is used to interact application layer configuration data on X2 interface between two eNBs to make the two eNBs can interact normally through the X2 interface. When establishing the X2 interface, the application layer configuration data to be interacted by the both parties covers ECGI (Evolved Universal Terrestrial Radio Access Network Cell Global Identifier), PCI (Physical Cell Identifier), downlink frequency, etc.

Specifically, as shown in Fig.3 diagram of configuration and update process of eNB, when the application layer configuration data of X2 interface of the eNB changes, the eNB shall inform an adjacent eNB through an eNB configuration update process to make the two eNBs to be operated normally on the X2 interface. The application layer configuration data possibly being updated covers ECGI, PCI, downlink frequency, etc.

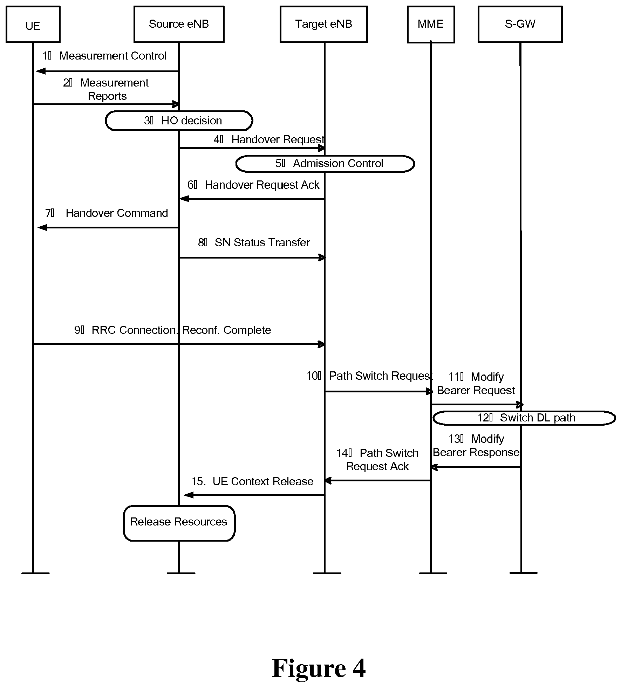

As shown in Fig. 4 diagram of X2 switching process, X2 switching covers switching preparation, switching implementation, path switch (Viz. switching completion) phases. Wherein, switching preparation phase is launched by a source eNB which decides which destination eNB is switched to; switching command message generated by the destination eNB is carried in the switching request acknowledgement message and is forwarded to a UE by the source eNB. In relay scenario, the DeNB can read the destination cell identifier therein and forward the switching request to corresponding destination eNB after receiving the switching request message.

In addition, CA (Carriers Aggregation) technology is an important technical feature introduced with an aim of satisfying peak rate of LTE-A. CA technology aggregates two and more cells together and can provide wider transmission bandwidth. For example, LTE-A system can realize the transmission bandwidth of 100 MHz through the CA technology. In CA technology, a UE can send and receive on a or a plurality of CC (Component Carrier) at the same time according to different capacities of the UE. The eNB can configure cells requiring being aggregated for the UE in accordance with the cell supported by the eNB, the aggregation capacity reported by the UE as well as service demand.

In prior LTE-A system, the RN is introduced with the purpose of increasing network coverage, which is connected with the DeNB in wireless mode. Wireless interface between the RN and the DeNB is named as Un interface. DeNB has agent function. Since the RN will select appropriate cell to introduce in accordance with the frequency of the Uu interface and DeNB cell of the RN, when the RN moves and further causes switch, its working state may change, such as changing from the mode requiring resource division to the mode not requiring resource division, or contrarily; while in the prior art, how does the backhaul sub-frame information is configured when the RN changes the donor cell is not described.

Furthermore, since RN communicates between Uu interface and the Un interface in wireless mode, to reduce the frequency interference, the RN shall put type of the RN and frequency resource used by the DeNB in the Un interface into additional consideration when configuring the cells aggregated by the UE on Uu interface.

Aiming to the problems above-mentioned, the examples of the disclosure provide a resource processing method and device based on relay node switching to provide a method how to configure RN working mode in Relay scenario when relay position changes. In examples of the disclosure, the method enables the RN to complete the configuration of backhaul sub-frame between the RN and the DeNB in switching process by ways of interacting necessary information between the source DeNB and the DeNB by using the prior UE switching flow and configure the CC reasonably to reduce the influence of switching on the RN and guarantee the service continuity of users to the maximum as well as reduce number of discarded packets.

In the following parts, clear and complete descriptions of the technology programs in examples of the disclosure are made combined with drawings of the examples. It is clear that the examples described here are only parts of the examples of the disclosure. According to the examples of the disclosure, any other examples made by technical personnel of the field in the absence of creative work all belong to scope of the patent protection of the invention as defined by the appended claims.

### Example I

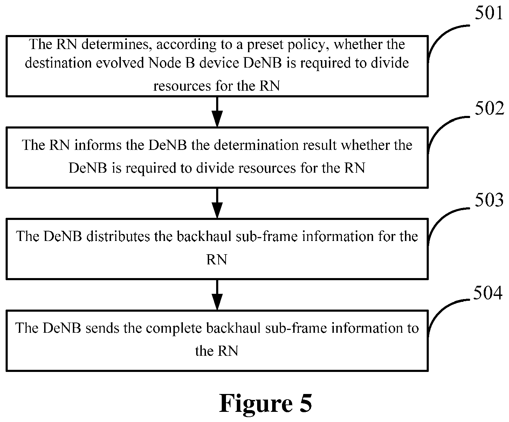

Example I provides a resource processing method based on relay node switching, as shown in Fig. 5, which comprises the following steps:
Step 501, the RN determines, according to a preset policy, whether the DeNB is required to divide resources for the RN. Wherein, when the Un launches CA function, the RN shall determine, according to a preset policy, whether the DeNB is required to divide resources for the RN for every frequency point.

Specifically, the RN can determine, according to a preset policy, whether the DeNB is required to configure the backhaul sub-frame information for the RN. Furthermore, the RN determines, according to frequency information of destination cell and the RN on Uu interface, whether the DeNB is required to configure the backhaul sub-frame information for the RN.

In practical application, when the frequency information of the destination cell is on the same frequency band with that of the RN on Uu interface, the RN determines the DeNB is required to configure the backhaul sub-frame information for the RN; when the frequency information of the destination cell is not on the same frequency band with that of the RN on Uu interface, the RN determines the DeNB is not required to configure the backhaul sub-frame information for the RN.

In examples of the disclosure , the RN shall also determine the cell resource information the DeNB is required to configure for the RN on Un interface. The determination process covers: the RN determines the cell resource information the DeNB can configure for the RN on Un interface according to RN type, the cell information the OAM (Operation and Maintenance) configures for the RN and supported by the Uu interface and the donor cell list accessed in the RN.

Step 502, the RN informs the DeNB the determination result whether the DeNB is required to divide resources for the RN. In examples of the disclosure , the RN can inform the DeNB the determination result whether the DeNB is required to divide resources for the RN and cell resource information configured for the RN.

In practical application, when informing the DeNB the determination result whether the DeNB is required to divide resources for the RN, the RN can add the first indication whether resources are required to be divided in RRC connection reconfiguration completion message and inform the DeNB the determination result through the first indication; or after switching, the RN adds the second indication whether resources are required to be divided in the preset RRC message and inform the DeNB the determination result through the second indication.

It should be noted that when the RN determines, according to the preset policy, the DeNB is required to divide resources for the RN, the RN can send the present backhaul sub-frame configuration information to the DeNB. Before determining, according to the preset policy, whether the DeNB is required to divide resources for the RN, the RN can receive the switch command carrying DeNB use frequency information from the DeNB; then the RN configures the CA cell of the RN used on Un interface according to the use frequency information of the DeNB.

Step 503, the DeNB distributes the backhaul sub-frame information for the RN after receiving the message the DeNB is required to divide resources for the RN.

In this step, the DeNB receives the backhaul sub-frame configuration information from the source DeNB before RN switching and distributes the backhaul sub-frame information for the RN in accordance with the backhaul sub-frame configuration information before switching. or,

The DeNB receives the backhaul sub-frame configuration information from the RN before switching and distributes the backhaul sub-frame information for the RN in accordance with the backhaul sub-frame configuration information before switching. Step 504, the DeNB sends the distributed backhaul sub-frame information to the RN. In this step, the DeNB sends the complete backhaul sub-frame information to the RN; or sends the changed backhaul sub-frame information to the RN.

In examples of the disclosure, the DeNB can acquire the switching at present in accordance with the indication from the source DeNB or indication of the destination MME (Mobility Management Entity) before receiving the message the DeNB is required to divide resources for the RN for switching RN; then the DeNB sends the switching command carrying use frequency information of the DeNB to the RN.

In examples of the disclosure, after the DeNB sending the switching command carrying use frequency information of the DeNB to the RN and receiving the CA cell that can be used by the RN in Un interface and determined by the RN according to the use frequency information of the DeNB, the DeNB configures the CA cells on Un interface according to the configuration situation.

### Example II

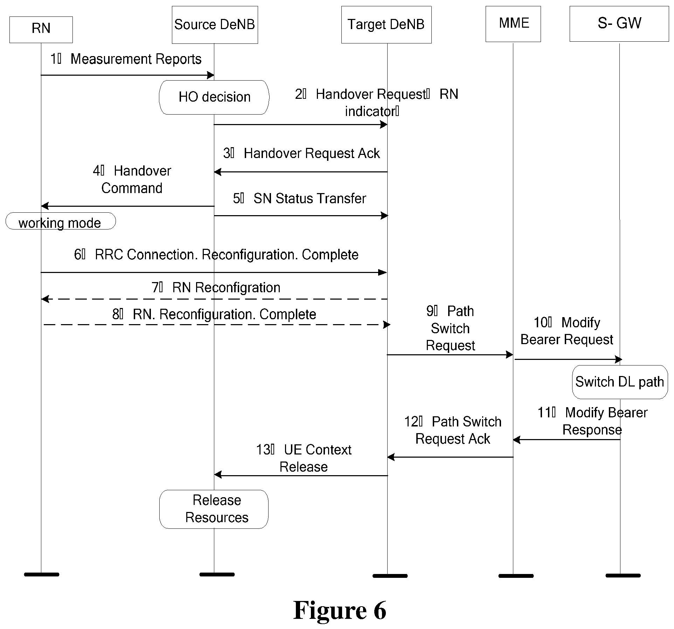

Example II provides a resource processing method based on relay node switching, describing with the X2 switching process as the example, as shown in Fig. 6, which comprises the following steps:
Step 1, the RN sends measurement report to the source DeNB.
Step 2, according to the measurement report, the source DeNB sends the Handover Request message to the DeNB when the RN requiring switching.

Wherein, if it is limited by backhaul sub-frame on Un interface when the RN communicates with the source DeNB, it is optional, and the source DeNB can send the backhaul sub-frame configuration information of the RN to the DeNB in Handover Request message, such as put the backhaul sub-frame configuration information of the RN in switching preparation message and send it to the DeNB.

In practical application, to reduce the influence on user of the RN, the source DeNB shall determine the destination cell in the mode not requiring changing RN working mode as far as possible, such as selecting the destination cell with the same frequency band with frequency of the present Un interface.

In this step, the source DeNB can also inform the DeNB that the switching process is a RN switching process in Handover Request.

Steps 3-4, the DeNB sends Handover Request acknowledgement to the source DeNB, and the source DeNB sends the switching command to the RN.

Specifically, the DeNB sends the switching command (Viz. RRC connection reconfiguration message) to the RN through the source DeNB and put the available empty frequency of the DeNB in switching command.

Steps 5-6, the source DeNB sends RN state transfer message to the DeNB, and the RN sends the RRC connection reconfiguration message to the DeNB.

Specifically, the RN determines, according to the preset policy, whether sources are required to be divided after receiving the RRC connection reconfiguration message. For example, the RN determines, according to the frequency information of the destination cell and Un interface of the RN, whether resources are required to be divided. When the frequency information of the destination cell locates in different frequency bands with the frequency information of the Uu interface, the RN determines the resources are not required to be divided; when the frequency information of the destination cell shares the same frequency bands with the frequency information of the Uu interface, the RN determines the resources are required to be divided. After determining whether the resources are required to be divided, the RN shall inform the DeNB the determination results.

In examples of the disclosure, if Un interface enables CA function, the RN shall judge whether resource division is required toward each frequency point, and inform the judgment result to the target DeNB.

Furthermore, when determining whether resources are required to be divided, the RN shall determine which cells (viz. the cell resource information the DeNB configures for the RN on Un interface) the DeNB can configure for the RN once the RN is connected to the DeNB. Wherein, the RN can determine the cell resource information the DeNB can configure for the RN on Un interface in accordance with RN type, cell information the RN OAM configures for the RN and supported by the Un interface and the donor cell list can be introduced for the RN.

After the above process, the RN can inform the DeNB the result whether resources are required to be divided and cell resource information configurable on Un interface. The RN shall inform the DeNB in the modes including, but not limited to: the RN adds the indication whether resources are required to be divided in the RRC connection reconfiguration completion message, or adds the indication whether resources are required to be divided in other RRC message after RN switching.

In practical application, the indication whether resources are required to be divided can emerge in the mode of optional cell or necessary cell. For example, emerge or set as "True" when resources are required to be divided, or do not emerge or set as "false" when resources are not required to be divided.

Furthermore, if CA is supported on Un interface, the RRC message abovementioned can carry the cell information configurable on Un interface; The cell information configurable for the Un interface can also be sent to the DeNB in the configuration completion message in Step 8.

In examples of the disclosure, if the RN determines the resources are required to be divided, it is optional, and the RN can send the sub-frame configuration information before switching to the DeNB when informing the DeNB the resources are required to be divided.

Step 7, the DeNB sends the RN reconfiguration message to the RN. Wherein, the DeNB distributes the backhaul sub-frame information for the RN after acquiring the resources are required to be divided for the RN and then launches the RN reconfiguration process to send the new backhaul sub-frame information to the RN. Specifically, if the DeNB receives the backhaul sub-frame configuration information used before RN switching in the Handover Request or RRC connection reconfiguration completion message, the DeNB can determine the new backhaul sub-frame configuration information with reference to the backhaul sub-frame configuration information used before RN switching. For example, the new backhaul sub-frame configuration information adopts the backhaul sub-frame configuration as the same as that before switching.

Before sending the new backhaul sub-frame configuration information, the complete backhaul sub-frame configuration information can be sent to the RN, and the changed backhaul sub-frame configuration information can be sent to the RN in increment configuration mode.

Then, the new backhaul sub-frame configuration information shall be applied when the RN receives the RN reconfiguration message:
Then, the follow-up steps 8-13 as shown in Fig. 6 are described in the prior art and will not be described again in examples of the disclosure. All steps in Fig. 6 do not have strict sequence. The flow shown in Fig. 6 is an optimized sequence.

### Example III

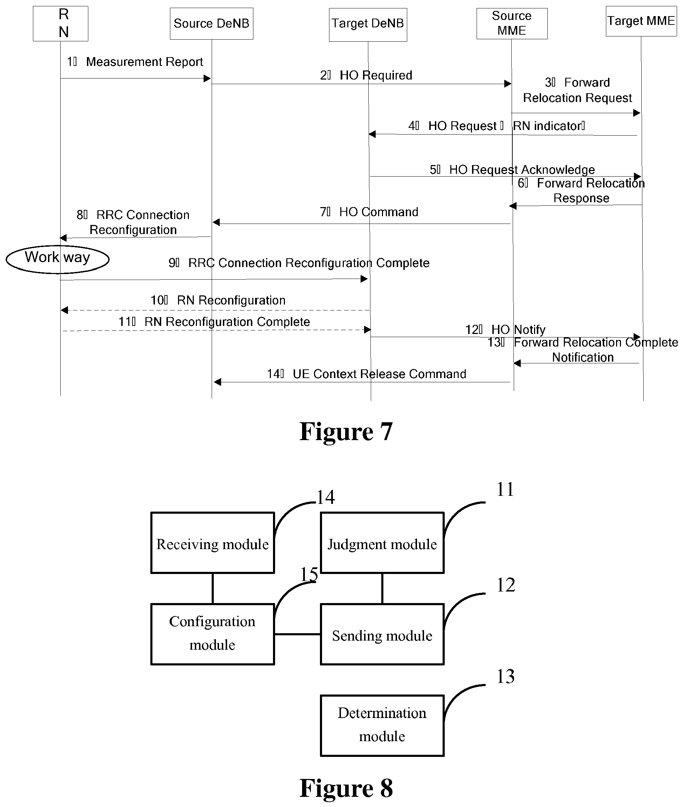

Example III provides a resource processing method based on relay node switching, describing with the S1 switching process as the example, as shown in Fig. 7, which comprises the following steps:
Step 1, the RN sends measurement report to the source DeNB.
Step 2, according to the measurement report, the source DeNB sends the Handover Request message to the source MME when the RN requiring switching.

Specifically, if it is limited by backhaul sub-frame on Un interface when the RN communicates with the source DeNB, it is optional, and the source DeNB can send the backhaul sub-frame configuration information of the RN to the DeNB in Handover Request message, such as send the backhaul sub-frame configuration information of the RN in Source To Target Transparent Container IE to the DeNB. Step 3, the source MME finds the destination MME and sends a Forward Relocation Request message.

Step 4, the destination MME determines the DeNB and sends Handover Request message to the DeNB.

Step 5, the DeNB returns the Handover Request acknowledgement message to the destination MME.

Step 6, the destination MME returns the Forward Relocation Response message to the destination MME.

Step 7, the source MME sends the switch command message to the destination DeNB. Step 8, the source DeNB sends the switch command message (viz. RRC connection reconfiguration message) to the RN.

In examples of the disclosure, if the DeNB acquires that a RN is switched, the DeNB puts the available empty frequency in the switch command message.

Specifically, the method for the DeNB to acquire the switching entity is RN includes: the source DeNB informs the DeNB through Source to Target Transparent Container during switching preparation; or the source MME firstly informs the destination MME, and then the destination MME informs the DeNB through the Handover Request message. In such mode, corresponding RN indication shall be added in the Forward Relocation Request and Handover Request message.

Step 9, the RN sends the RRC connection reconfiguration completion message to the DeNB.

Specifically, the RN determines, according to the preset policy, whether sources are required to be divided after receiving the RRC connection reconfiguration message. For example, the RN determines, according to the frequency information of the destination cell and Un interface of the RN, whether resources are required to be divided. When the frequency information of the destination cell locates in different frequency bands with the frequency information of the Uu interface, the RN determines the resources are not required to be divided; when the frequency information of the destination cell shares the same frequency bands with the frequency information of the Uu interface, the RN determines the resources are required to be divided. After determining whether the resources are required to be divided, the RN shall inform the DeNB the determination results.

In examples of the disclosure, if Un interface enables CA function, the RN shall judge whether resource division is required toward each frequency point, and inform the judgment result to the target DeNB.

Furthermore, when determining whether resources are required to be divided, the RN shall determine which cells (viz. the cell resource information the DeNB configures for the RN on Un interface) the DeNB can configure for the RN once the RN is connected to the DeNB. Wherein, the RN can determine the cell resource information the DeNB can configure for the RN on Un interface in accordance with RN type, cell information the RN OAM configures for the RN and supported by the Un interface and the donor cell list can be introduced for the RN.

After the above process, the RN can inform the DeNB the result whether resources are required to be divided and cell resource information configurable on Un interface. The RN shall inform the DeNB in the modes including, but not limited to: the RN adds the indication whether resources are required to be divided in the RRC connection reconfiguration completion message, or adds the indication whether resources are required to be divided in other RRC message after RN switching.

Furthermore, if CA is supported on Un interface, the RRC message abovementioned can carry the cell information configurable on Un interface; the cell information configurable for the Un interface can be sent to the DeNB in the configuration completion message in Step 9; or in the RN reconfiguration completion message in Step 11.

In examples of the disclosure, if the RN determines the resources are required to be divided, it is optional, and the RN can send the sub-frame configuration information before switching to the DeNB when informing the DeNB the resources are required to be divided.

Step 10, the DeNB sends the RN reconfiguration message to the RN. Wherein, this step shares the same handling process with the step 7 in Example II, which will not be described in this example.

Then, the new backhaul sub-frame configuration information shall be applied when the RN receives the RN reconfiguration message.

Then, the follow-up steps 11-14 as shown in Fig. 7 are described in the prior art and will not be described again in examples of the disclosure, All steps in Fig. 7 do not have strict sequence. The flow shown in Fig. 7 is an optimized sequence.

### Example IV

Based on the same concept with the method above, examples of the disclosure also provide a RN, as shown in Fig. 8, which comprises:
A judgment module 11, is used to determine, according to the preset policy, whether the DeNB is required to divide resources for the RN;
A sending module 12, is used to inform the DeNB the determination result.

The judgment module 11, is specifically used to when the Un launches CA function, the RN shall determine, according to a preset policy, whether the DeNB is required to divide resources for the RN for every frequency point.

The judgment module 11, is specifically used to determine, according to the preset policy, whether the DeNB is required to configure the backhaul sub-frame information for the RN.

The judgment module 11, is further used to determine, according to the frequency information of the destination cell and that of the RN on Uu interface, whether the DeNB is required to configure the backhaul sub-frame information for the RN.

The judgment module 11, is specifically used to determine the DeNB is required to configure the backhaul sub-frame information for the RN when the frequency information of the destination cell shares the same frequency band with the frequency information of the RN on Un interface.

The RN also comprises:
A determination module 13, is used to determine the cell resource information the DeNB configures for the RN on Un interface.

The determination module 13, is specifically used to determine the cell resource information the DeNB configures for the RN on Un interface according to RN type, the cell information the OAM configures for the RN and supported by the Uu interface and the donor cell list accessed in the RN.

The sending module 12, is specifically used to inform the DeNB the determination result whether the DeNB is required to divide resources for the RN and cell resource information configured for the RN.

The sending module 12, is specifically used to add the first indication whether resources are required to be divided in RRC connection reconfiguration completion message and inform the DeNB the determination result through the first indication; or, Add the second indication whether resources are required to be divided in the preset RRC message after switching and inform the DeNB the determination result through the second indication

The sending module 12, is also used to send the present backhaul sub-frame configuration information to the DeNB if the DeNB is required to divide resources for the RN.

The RN also comprises:
A receiving module 14, is used to receive the switch command carrying DeNB use frequency information from the DeNB;
A configuration module 15, is used to configure the CA cell of the RN used on Un interface according to the use frequency information of the DeNB.

Wherein, all modules of device in examples of the disclosure can be assembled as a whole, or deployed separately. The modules can be combined as a module, or further dismantled into a plurality of submodules.

### Example V

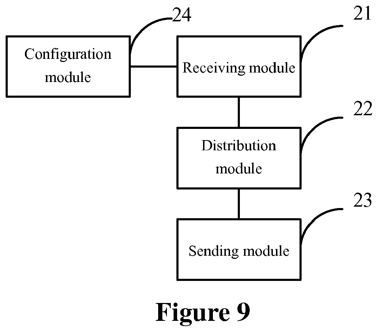

Based on the same concept with the method above, examples of the disclosure also provide an eNB device, as shown in Fig. 9, which comprises:
A receiving module 21, is used to receive the message from the RN that the DeNB is required to divide resources for the RN;
A distribution module 22, is used to distribute the backhaul sub-frame information for the RN;
A sending module 23, is used to send the distributed backhaul sub-frame information to the RN.

The distribution module 22, is specifically used to receive the backhaul sub-frame configuration information from the source DeNB before RN switching and distributes the backhaul sub-frame information for the RN in accordance with the backhaul sub-frame configuration information before switching.

The distribution module 22, is specifically used to receive the backhaul sub-frame configuration information from the RN before switching and distributes the backhaul sub-frame information for the RN in accordance with the backhaul sub-frame configuration information before switching.

The sending module 23, is specifically used to send the complete backhaul sub-frame information to the RN; or,

Send the changed backhaul sub-frame information to the RN.

The sending module 23, is also used to acquire the switching at present is RN switching in accordance with the indication from the source DeNB or indication of the destination MME; and send the switch command carrying DeNB use frequency information to the RN.

The RN also comprises:
A configuration module 24, is used to configure the available CA cell on Un interface according to the determination situation when receiving the CA cell of the RN used on Un interface determined by the RN in accordance with the use frequency information of the DeNB.

Wherein, all modules of device in examples of the disclosure can be assembled as a whole, or deployed separately. The modules can be combined as a module, or further dismantled into a plurality of submodules.

Through the description of the examples above, the technical personnel in this field can understand clearly that the present disclosure can be implemented by software and necessary general hardware platform or hardware (the former is better in most cases). Based on this understanding, the technical program or the part making contributions to the prior art of the present disclosure can be embodied by a form of software products essentially which can be stored in a storage medium, including a number of instructions for making a computer device (such as personal computers, servers, or network equipments, etc.) implement the methods described in the examples of the disclosure.

The technical personnel in this field can be understood that the illustration is only schematic drawings of a preferred example, and the module or process is not necessary for the implementation of the present disclosure.

The technical personnel in this field can be understood that the modules can be distributed in device of the examples according to the description of the examples above, and also can be varied in one or multiply device of the examples. The modules of the examples can be combined into a module, and also can be further split into several sub-modules.

The number of the examples is only to describe, it does not represent the pros and cons of the examples.

The descriptions above are just preferred implement ways of the present disclosure. It should be pointed that, for general technical personnel in this field, some improvement and decorating can be done, which should be as the protection scope of the present disclosure which is defined by the appended claims.

## Claims

1. A resource processing method performed by a network system that comprises a relay node, RN, a Donor Evolved Node B, DeNB, a Un interface, and a Uu interface, the method comprising:
determining (501), by the RN according to a preset policy, whether the DeNB is required to divide resources for the RN;
informing (502), by the RN, the DeNB of the determination result as to whether the DeNB is required to divide resources for the RN;
determining, by the RN when a carrier aggregation, CA, function is enabled on the Un interface, whether the DeNB is required to divide resources for the RN for every frequency point; and
determining, by the RN according to the preset policy, whether the DeNB is required to configure backhaul sub-frame information for the RN,
wherein:
informing by the RN the DeNB of the determination result as to whether the DeNB is required to divide resources for the RN comprises:
determining, by the RN, the cell resource information the DeNB configures for the RN on the Un interface; and
informing the DeNB by the RN of the determination result as to whether the DeNB is required to divide resources for the RN, as well as the cell resource information configured for the RN on the Un interface;
determining by the RN the cell resource information the DeNB configures for the RN on the Un interface comprises:
determining, by the RN, the cell resource information the DeNB configured for the RN on the Un interface in accordance with RN type, cell information which an operation and maintenance, OAM, of the RN configures for the RN and that is supported by the Un interface, and a donor cell list that can be introduced for the RN.

2. The method according to claim 1, wherein, determining by the RN, according to the preset policy, whether the DeNB is required to configure the backhaul sub-frame information for the RN, comprises:
determining, by the RN, based on frequency information of a destination cell and frequency information of the RN on the Uu interface, whether the DeNB is required to configure the backhaul sub-frame information for the RN; and/or,
the method further comprises:
when the frequency information of the destination cell is on the same frequency band with that of the RN on the Uu interface, determining, by the RN, that the DeNB is required to configure the backhaul sub-frame information for the RN.

3. The method according to claim 1, wherein, informing by the RN the DeNB of the determination results as to whether the DeNB is required to divide resources for the RN comprises:
adding, by the RN, a first indication which is indicative of whether resources are required to be divided in a radio resource control, RRC, connection reconfiguration completion message so as to inform the DeNB of the determination result through the first indication; or,
adding, by the RN, a second indication which is indicative of whether resources are required to be divided in the RRC message after a relay node switching operation is performed so as to inform the DeNB of the determination result through the second indication.

4. The method according to claim 1, wherein:
after determining by the RN, according to a preset policy, whether the DeNB is required to divide resources for the RN, the method comprises:
sending by the RN present backhaul sub-frame configuration information to the DeNB if the DeNB is required to divide resources for the RN;
before determining by RN, to a preset policy, whether the DeNB is required to divide resources for the RN, the method comprises:
receiving by the RN a switch command indicating that relay node switching should occur, the switch command carrying DeNB use frequency information from the DeNB; and
the method further comprises:
configuring by the RN the CA cell of the RN used on Un interface according to the use frequency information of the DeNB.

5. A relay node, RN, operable to communicate within a network system that comprises the relay node, a Donor Evolved Node B, DeNB, a Un interface, and a Uu interface, the relay node comprising:
a judgment module (11) operable to determine whether the DeNB is required to divide resources for the RN according to the preset policy;
a determination module (13) operable to determine the cell resource information the DeNB configures for the RN on the Un interface; and
a sending module (12) operable to inform the DeNB the determination result as to whether the DeNB is required to divide resources for the RN,
wherein:
the judgement module (11) is operable to:
determine, when a carrier aggregation, CA, function is enabled on the Un interface, whether the DeNB is required to divide resources for the RN for every frequency point; and
determine, according to the preset policy, whether the DeNB is required to configure backhaul sub-frame information for the RN,
the determination module (13) is operable to determine the cell resource information the DeNB configures for the RN on the Un interface according to RN type, the cell information that operation and management, OAM, configures for the RN and that is supported by the Uu interface, and a donor cell list accessed in the RN; and
the sending module (12) is operable to inform the DeNB of the determination result as to whether the DeNB is required to divide resources for the RN as well as the cell resource information configured for the RN on the Un interface.

6. The relay node according to claim 5, wherein,
the judgment module (11) is operable to determine, based on frequency information of a
destination cell and frequency information of the RN on the Uu interface, whether the DeNB is required to configure the backhaul sub-frame information for the RN; and
the judgment module (11) is operable to determine that the DeNB is required to configure the backhaul sub-frame information for the RN when the frequency information of the destination cell shares the same frequency band with the frequency information of the RN on the Un interface.

7. The relay node according to claim 5, wherein,
the sending module (12) is operable to:
add a first indication which is indicative of whether resources are required to be divided in Radio Resource Control, RRC, connection reconfiguration completion message so as to inform the DeNB of the determination result through the first indication; or,
add a second indication which is indicative of whether resources are required to be divided in the RRC message after a relay node switching operation is performed so as to inform the DeNB of the determination result through the second indication;
and/or,
the sending module (12) is operable to send present backhaul sub-frame configuration information to the DeNB if the DeNB is required to divide resources for the RN;
wherein, the relay node further comprises:
a receiving module (14) operable to receive a switch command indicating that a relay node switching operation should be performed, the switch command carrying DeNB use frequency information from the DeNB; and
a configuration module (15) operable to configure the CA cell of the RN used on the Un interface according to the use frequency information of the DeNB.

## Patentansprüche

1. Ressourcenverarbeitungsverfahren, das von einem Netzwerksystem ausgeführt wird, das einen Relaisknoten (RN, relay node), einen Donor Evolved Node B (DeNB), eine Un-Schnittstelle und eine Uu-Schnittstelle umfasst, wobei das Verfahren umfasst:
Bestimmen (501) durch den RN gemäß einer voreingestellten Richtlinie, ob der DeNB Ressourcen für den RN teilen muss;
Informieren (502) des DeNB durch den RN über das Bestimmungsergebnis, ob der DeNB Ressourcen für den RN teilen muss;
Bestimmen durch den RN, wenn eine Trägeraggregationsfunktion (CA, carrier aggregation) auf der Un-Schnittstelle aktiviert ist, ob der DeNB Ressourcen für den RN für jeden Frequenzpunkt teilen muss; und
Bestimmen durch den RN gemäß der voreingestellten Richtlinie, ob der DeNB Backhaul-Teilrahmeninformationen für den RN konfigurieren muss,
wobei:
Informieren des DeNB über das Bestimmungsergebnis durch den RN darüber, ob der DeNB Ressourcen für den RN teilen muss, umfasst:
Bestimmen der Zellenressourceninformationen durch den RN, die der DeNB für den RN auf der Un-Schnittstelle konfiguriert; und
Informieren des DeNB durch den RN über das Bestimmungsergebnis, ob der DeNB Ressourcen für den RN teilen muss, sowie die für den RN konfigurierten Zellenressourceninformationen auf der Un-Schnittstelle;
Bestimmen der Zellenressourceninformationen durch den RN, die der DeNB für den RN auf der Un-Schnittstelle konfiguriert, umfasst:
Bestimmen der Zellenressourceninformationen durch den RN, die der DeNB für den RN auf der Un-Schnittstelle gemäß dem RN-Typ konfigurierte, Zelleninformationen, die ein Betrieb und eine Wartung (OAM, operation and maintenance) des RN für den RN konfiguriert, und die von der Un-Schnittstelle unterstützt werden, und eine Spenderzellenliste, die für den RN eingeführt werden kann.

2. Verfahren nach Anspruch 1, wobei Bestimmen durch den RN gemäß der voreingestellten Richtlinie, ob der DeNB Backhaul-Teilrahmeninformationen für den RN konfigurieren muss, umfasst:
Bestimmen durch den RN basierend auf Frequenzinformationen einer Zielzelle und Frequenzinformationen des RN auf der Uu-Schnittstelle, ob der DeNB Backhaul-Teilrahmeninformationen für den RN konfigurieren muss; und/oder,
wobei das Verfahren ferner umfasst:
wenn sich die Frequenzinformationen der Zielzelle im gleichen Frequenzband wie die des RN auf der Uu-Schnittstelle befinden, Bestimmen durch den RN, dass der DeNB Backhaul-Teilrahmeninformationen für den RN konfigurieren muss.

3. Verfahren nach Anspruch 1, wobei Informieren des DeNB über die Bestimmungsergebnisse durch den RN darüber, ob der DeNB Ressourcen für den RN teilen muss, umfasst:
Hinzufügen einer ersten Angabe durch den RN, die angibt, ob Ressourcen in einer Nachricht zum Abschluss der Verbindungsrekonfiguration der Funkressourcensteuerung (RRC, radio resource control) geteilt werden müssen, um den DeNB über das Bestimmungsergebnis durch die erste Angabe zu informieren; oder,
Hinzufügen einer zweiten Angabe durch den RN, die angibt, ob Ressourcen in der RRC-Nachricht geteilt werden müssen, nachdem ein Relaisknoten-Schaltvorgang durchgeführt wurde, um den DeNB über das Bestimmungsergebnis durch die zweite Angabe zu informieren.

4. Verfahren nach Anspruch 1, wobei:
nachdem der RN gemäß einer voreingestellten Richtlinie bestimmt hat, ob der DeNB Ressourcen für den RN teilen muss, das Verfahren umfasst:
Senden von aktuellen Backhaul-Teilrahmen-Konfigurationsinformationen durch den RN an den DeNB, wenn der DeNB Ressourcen für den RN teilen muss;
vor dem Bestimmen durch den RN gemäß einer voreingestellten Richtlinie, ob der DeNB Ressourcen für den RN teilen muss, umfasst das Verfahren:
Empfangen eines Schaltbefehls durch den RN, der angibt, dass Relaisknoten-Schalten stattfinden sollte, wobei der Schaltbefehl DeNB-Nutzungsfrequenzinformationen von dem DeNB trägt; und
wobei das Verfahren ferner umfasst:
Konfigurieren der CA-Zelle des RN, die auf der Un-Schnittstelle verwendet wird, durch den RN gemäß den DeNB-Nutzungsfrequenzinformationen.

5. Relaisknoten (RN), funktionsfähig zur Kommunikation innerhalb
eines Netzwerksystems, das den Relaisknoten, einen Donor Evolved Node B (DeNB), eine Un-Schnittstelle und eine Uu-Schnittstelle umfasst, wobei der Relaisknoten umfasst:
ein Beurteilungsmodul (11), funktionsfähig zum Bestimmen, ob der DeNB Ressourcen für den RN gemäß der voreingestellten Richtlinie teilen muss;
ein Bestimmungsmodul (13), funktionsfähig zum Bestimmen der Zellenressourceninformationen, die der DeNB für den RN auf der Un-Schnittstelle konfiguriert; und
ein Sendemodul (12), funktionsfähig zum Informieren des DeNB über das Bestimmungsergebnis, ob der DeNB Ressourcen für den RN teilen muss,
wobei:
das Beurteilungsmodul (11) funktionsfähig ist zum:
Bestimmen, wenn eine Trägeraggregationsfunktion (CA) auf der Un-Schnittstelle aktiviert ist, ob der DeNB Ressourcen für den RN für jeden Frequenzpunkt teilen muss; und
Bestimmen durch den RN gemäß der voreingestellten Richtlinie, ob der DeNB Backhaul-Teilrahmeninformationen für den RN konfigurieren muss,
das Bestimmungsmodul (13) funktionsfähig zum Bestimmen der Zellenressourceninformationen ist, die der DeNB für den RN auf der Un-Schnittstelle gemäß dem RN-Typ konfiguriert, die Zelleninformationen, die Betrieb und Wartung (OAM) für den RN konfigurieren, und die von der Uu-Schnittstelle unterstützt werden, und eine Spenderzellenliste, auf die im RN zugegriffen wird; und
das Sendemodul (12) funktionsfähig ist, den DeNB über das Bestimmungsergebnis darüber zu informieren, ob der DeNB Ressourcen für den RN teilen muss, sowie die für den RN konfigurierten Zellenressourceninformationen auf der Un-Schnittstelle.

6. Relaisknoten nach Anspruch 5, wobei
das Beurteilungsmodul (11) basierend auf Frequenzinformationen einer Zielzelle und Frequenzinformationen des RN auf der Uu-Schnittstelle funktionsfähig ist zu bestimmen, ob der DeNB Backhaul-Teilrahmeninformationen für den RN konfigurieren muss; und
das Beurteilungsmodul (11) funktionsfähig ist zu bestimmen, dass der DeNB die Backhaul-Teilrahmeninformationen für den RN konfigurieren muss, wenn die Frequenzinformationen der Zielzelle dasselbe Frequenzband mit den Frequenzinformationen des RN auf der Un-Schnittstelle gemeinsam nutzen.

7. Relaisknoten nach Anspruch 5, wobei
das Sendemodul (12) funktionsfähig ist zum:
Hinzufügen einer ersten Angabe, die angibt, ob Ressourcen in einer Nachricht zum Abschluss der Verbindungsrekonfiguration der Funkressourcensteuerung (RRC) geteilt werden müssen, um den DeNB über das Bestimmungsergebnis durch die erste Angabe zu informieren; oder,
Hinzufügen einer zweiten Angabe durch den RN, die angibt, ob Ressourcen in der RRC-Nachricht geteilt werden müssen, nachdem ein Relaisknoten-Schaltvorgang durchgeführt wurde, um den DeNB über das Bestimmungsergebnis durch die zweite Angabe zu informieren;
und/oder,
das Sendemodul (12) funktionsfähig ist, aktuelle Konfigurationsinformationen für den Backhaul-Teilrahmen an den DeNB zu senden, wenn der DeNB Ressourcen für den RN teilen muss;
wobei der Relaisknoten ferner Folgendes umfasst:
ein Empfangsmodul (14), das funktionsfähig ist, einen Schaltbefehl zu senden, der angibt, dass ein Relaisknoten-Schalten durchgeführt werden sollte, wobei der Schaltbefehl DeNB-Nutzungsfrequenzinformationen von dem DeNB trägt; und
ein Konfigurationsmodul (15), das zum Konfigurieren der CA-Zelle des RN, die auf der Un-Schnittstelle verwendet wird, durch den RN gemäß den DeNB-Nutzungsfrequenzinformationen funktionsfähig ist.

## Revendications

1. Procédé de traitement de ressources exécuté par un système de réseau qui comprend un nœud de relais, RN, un nœud évolué donneur B, DeNB, une interface Un et une interface Uu, le procédé comprenant :
la détermination (501), par le RN selon une politique prédéfinie, de l'éventuelle nécessité pour le DeNB de diviser les ressources pour le RN ;
l'information (502), par le RN, du DeNB du résultat de détermination de l'éventuelle nécessité pour le DeNB de diviser les ressources pour le RN ;
la détermination, par le RN lorsqu'une fonction d'agrégation de porteuses, CA, est activée sur l'interface Un, de l'éventuelle nécessité pour le DeNB de diviser les ressources pour le RN pour chaque point de fréquence ; et
la détermination, par le RN selon la politique prédéfinie, de l'éventuelle nécessité pour le DeNB de configurer des informations de sous-trame de liaison terrestre pour le RN,
dans lequel :
l'information par le RN du DeNB du résultat de détermination de l'éventuelle nécessité pour le DeNB de diviser les ressources pour le RN comprend :
la détermination, par le RN, des informations de ressources de cellule que le DeNB configure pour le RN sur l'interface Un ; et
l'information du DeNB par le RN du résultat de la détermination de l'éventuelle nécessité pour le DeNB de diviser les ressources pour le RN, ainsi que des informations de ressources de cellule configurées pour le RN sur l'interface Un ;
la détermination par le RN des informations de ressources de cellule que le DeNB configure pour le RN sur l'interface Un comprend :
la détermination, par le RN, des informations de ressources de cellule que le DeNB a configurées pour le RN sur l'interface Un selon le type de RN, des informations de cellule qu'une opération et une maintenance, OAM, du RN configure pour le RN et qui sont prises en charge par l'interface Un et une liste de cellules donneuses qui peut être introduite pour le RN.

2. Procédé selon la revendication 1, dans lequel, la détermination par le RN, selon la politique prédéfinie, de l'éventuelle nécessité pour le DeNB de configurer les informations de sous-trame de liaison terrestre pour le RN, comprend :
la détermination, par le RN, en fonction des informations de fréquence d'une cellule de destination et des informations de fréquence du RN sur l'interface Uu, de l'éventuelle nécessité pour le DeNB de configurer les informations de sous-trame de liaison terrestre pour le RN ; et/ou,
le procédé comprend en outre :
lorsque les informations de fréquence de la cellule de destination sont sur la même bande de fréquences que celles du RN sur l'interface Uu, la détermination, par le RN, de l'éventuelle nécessité pour le DeNB de configurer les informations de sous-trame de liaison terrestre pour le RN.

3. Procédé selon la revendication 1, dans lequel l'information du DeNB par le RN des résultats de détermination de l'éventuelle nécessité pour le DeNB de diviser les ressources pour le RN comprend :
l'ajout, par le RN, d'une première indication qui indique si les ressources doivent être divisées dans un message de fin de reconfiguration de connexion de commande de ressources radio, RRC, de manière à informer le DeNB du résultat de détermination par la première indication ; ou,
l'ajout, par le RN, d'une seconde indication qui indique si les ressources doivent être divisées dans le message de RRC après réalisation d'une opération de commutation de nœud de relais, de manière à informer le DeNB du résultat de la détermination par la seconde indication.

4. Procédé selon la revendication 1, dans lequel :
après la détermination par le RN, selon une politique prédéfinie, de la nécessité pour le DeNB de diviser les ressources pour le RN, le procédé comprend :
l'envoi, par le RN, d'informations actuelles de configuration de sous-trame de liaison terrestre au DeNB si le DeNB doit diviser les ressources pour le RN ;
avant la détermination par le RN, selon une politique prédéfinie, de la nécessité pour le DeNB de diviser les ressources pour le RN, le procédé comprend :
la réception par le RN d'une instruction de commutation indiquant qu'une commutation de nœud de relais devrait avoir lieu, l'instruction de commutation transportant les informations de fréquence d'utilisation de DeNB provenant du DeNB ; et
le procédé comprend en outre :
la configuration par le RN de la cellule de CA du RN utilisé sur l'interface Un selon les informations de fréquence d'utilisation du DeNB.

5. Nœud de relais, RN, utilisable pour communiquer à l'intérieur
d'un système de réseau qui comprend le nœud de relais, un nœud évolué donneur B, DeNB, une interface Un et une interface Uu, le nœud de relais comprenant :
un module de jugement (11) utilisable pour déterminer si le DeNB doit diviser les ressources pour le RN selon la politique prédéfinie ;
un module de détermination (13) utilisable pour déterminer les informations de ressources de cellule que le DeNB configure pour le RN sur l'interface Un ; et
un module d'envoi (12) utilisable pour informer le DeNB du résultat de la détermination de l'éventuelle nécessité pour le DeNB de diviser les ressources pour le RN,
dans lequel :
le module de jugement (11) est utilisable pour :
déterminer, lorsqu'une fonction d'agrégation de porteuses, CA, est activée sur l'interface Un, si le DeNB doit diviser les ressources pour le RN pour chaque point de fréquence ; et
déterminer, selon la politique prédéfinie, si le DeNB doit configurer les informations de sous-trame de liaison terrestre pour le RN,
le module de détermination (13) est utilisable pour déterminer les informations de ressources de cellule que le DeNB configure pour le RN sur l'interface Un selon le type de RN, les informations de cellule qu'une opération et une maintenance, OAM, configure pour le RN et qui sont prises en charge par l'interface Uu et une liste de cellules donneuses accessibles dans le RN ; et
le module d'envoi (12) est utilisable pour informer le DeNB du résultat de la détermination de l'éventuelle nécessité pour le DeNB de diviser les ressources pour le RN ainsi que les informations de ressources de cellule configurées pour le RN sur l'interface Un.

6. Nœud de relais selon la revendication 5, dans lequel,
le module de jugement (11) est utilisable pour déterminer, en fonction des informations de fréquence d'une cellule de destination et des informations de fréquence du RN sur l'interface Uu, si le DeNB doit configurer les informations de sous-trame de liaison terrestre pour le RN ; et
le module de jugement (11) est utilisable pour déterminer que le DeNB doit configurer les informations de sous-trame de liaison terrestre pour le RN lorsque les informations de fréquence de la cellule de destination partagent la même bande de fréquences que les informations de fréquence du RN sur l'interface Un.

7. Nœud de relais selon la revendication 5, dans lequel,
le module d'envoi (12) est utilisable pour :
ajouter une première indication qui indique si les ressources doivent être divisées dans un message de fin de reconfiguration de connexion de commande de ressources radio, RRC, de manière à informer le DeNB du résultat de la détermination par la première indication ; ou,
ajouter une seconde indication qui indique si les ressources doivent être divisées dans le message de RRC après réalisation d'une opération de commutation de nœud de relais, de manière à informer le DeNB du résultat de la détermination par la seconde indication ;
et/ou,
le module d'envoi (12) est utilisable pour envoyer des informations actuelles de configuration de sous-trame de liaison terrestre au DeNB si le DeNB doit diviser les ressources pour le RN ;
dans lequel, le nœud de relais comprend en outre :
un module de réception (14) utilisable pour recevoir une instruction de commutation indiquant qu'une opération de commutation de nœud de relais devrait avoir lieu, l'instruction de commutation portant les informations de fréquence d'utilisation de DeNB provenant du DeNB ; et
un module de configuration (15) utilisable pour configurer la cellule de CA du RN utilisé sur l'interface Un selon les informations de fréquence d'utilisation du DeNB.
